# EUROPEAN PATENT APPLICATION

(11) **EP 1 840 706 A1**
(43) Date of publication of application: **03.10.2007**
(21) Application number: 06112141.4
(22) Date of filing: 31.03.2006
(51) Int. Cl.: G06F 3/033, H04M 1/247, H04M 1/725

(54) **Context-sensitive menu with a reduced set of functions for a mobile communication device**

(71) Applicant: Research In Motion Limited, Waterloo, Ontario N2L 3W8 (CA)
(72) Inventor: Scott, Sherryl Lee Lorraine, Toronto, Ontario M5T 1Y9 (CA)
(74) Representative: Rickard, David John

(57) **Abstract**

A mobile communication device having a user interface for invoking a command displays a reduced set of commands accessed by actuating an input device on the mobile communication device, the reduced set of commands comprises a set of context-sensitive commands derived from a full-function set of commands associated with an application. The input device may be a dedicated input device, such as a trackball, for accessing the set of context-sensitive commands.

## Description

The present invention relates generally to mobile communication devices. More particularly, the present invention relates to an interface and method for invoking a command associated with an application on a mobile communication device.

Mobile communication devices are widely used for performing tasks such as sending and receiving e-mails, placing and receiving phone calls, editing and storing contact information, and scheduling. Users typically activate a desired application by engaging one or more input devices (e.g., real and virtual keys, touch screens, thumb wheels or switches) present on the device.

Mobile devices serve as a platform for a user to execute a large number of applications, each of which has numerous commands associated with each application. Conventionally, applications are executed in response to a selection in either a menu driven or icon driven application launcher. With large numbers of applications, both icon-driven application launchers and menu-driven application launchers can become unwieldy and menu-driven application launchers often require many nested layers. Often, a user will only make use of a small number of the applications, and in each application will make use of only a small selection of the available commands on a routine basis. Long menus that require scrolling through, or multiple menus required to navigate the functionality of the device result in the user consuming an undesirable amount of time for a routinely-performed task.

Another problem arising from conventional user interfaces on mobile devices relates to the selection of a particular command. Due to the small size of the device, the limited keypad and other input devices that are available to the user, it is often difficult to easily identify or select an application or menu option with a single hand, particularly from a long list of options. Several keystrokes may be required, typically requiring the use of both hands. The limited number of input devices has necessitated combining numerous, often unrelated commands to a single input device. This catch-all approach has often frustrated beginner- and advanced-level users alike, who may routinely perform only a select few of the commands offered. In addition, it is often necessary for the user to engage two or more input devices in rapid succession (e.g. a key on a keyboard to activate a menu and then a thumb wheel to scroll between the presented options) to access a particular command from a menu. The use of different input devices can be awkward for a user who is performing other tasks that require relatively undivided attention.

Manipulating (e.g., editing) text can also be cumbersome and frustrating, particularly in a mobile setting, which can lead to unwanted input errors. A user performing text editing first selects the text to be edited, such as activating a select function from a menu, using a thumbwheel to select a block of text, then selecting one or more commands such as copy, cut and/or paste from another menu. Because of the limited space available on the screen of a device, a menu of editing options often obscures the text to be edited.

It is desirable, therefore, to provide an interface which provides greater ease of use and access to functions and commands which are more likely to be performed and invoked on a mobile communication device during a specific task.

### BRIEF DESCRIPTION OF THE DRAWINGS

Embodiments of the present invention will now be described, by way of example only, with reference to the attached Figures, wherein:
Fig. 1 shows an applications/activities menu in an interface of a mobile communication device according to the present invention;
Fig. 2 shows a nested menu within the interface of menu of Fig. 1;
Fig. 3 shows a further embodiment of an applications/activities menu according to the present invention;
Fig. 4 shows an applications/activities menu according to the present invention for a messaging application;
Fig. 5 shows a command subset within the applications/activities menu of Fig. 4;
Fig. 6 shows a messaging interface;
Fig. 7 shows an opened message interface;
Fig. 8 shows a primary actions menu within the opened message interface of Fig. 7;
Fig. 9 shows a further embodiment of a primary actions menu according to the present invention;
Fig. 10 shows a memo interface;
Fig. 11 shows a context-sensitive edit menu within the memo interface of Fig. 10;
Fig. 12 shows the selection of a cut command in the context-sensitive edit menu of Fig. 11; and
Fig. 13 shows a mobile communications device.

### DESCRIPTION OF PREFERRED EMBODIMENTS

Preferably the present invention obviates or mitigates at least one disadvantage of previous interfaces and methods for performing functions and invoking commands on a mobile communication device.

In one aspect of the present invention there is preferably provided a mobile communication device comprising a housing having a display and a plurality of input devices, and an interface for invoking a command associated with an application on the mobile communication device, the interface comprising a reduced set of commands on the display and accessed by actuating one of the plurality of input devices, the reduced set of commands comprising a set of context-sensitive commands derived from a full-function set of commands associated with the application.

In another aspect of the present invention there is preferably provided a user interface for invoking a context-sensitive command associated with an application on a mobile communication device, the interface comprising a display, a plurality of input devices on the mobile communication device, and a reduced set of commands on the display accessed by actuating one of the input devices, the reduced set of commands comprising a set of context-sensitive commands derived from a full-function set of commands associated with the application.

In yet another aspect of the present invention there is preferably provided a method of invoking a command associated with an application on a mobile communication device, the method comprising selecting the application from an application interface, actuating an input device on the mobile communication device to display a reduced set of context-sensitive commands derived from a full-function set of commands associated with the application, selecting the command from the set of context-sensitive commands, and actuating the input device to invoke the command.

The set of context-sensitive commands can be a menu comprising commands which are more likely to be performed in the application than commands from the full-function set of commands.

An additional, dedicated input device on the device (such as a trackball) for invoking a context-sensitive command is provided. Using the trackball, accessing a longer set of commands associated with a particular application is not required. This saves the user time and increases productivity.

Additionally, an applications/activities menu or a full-function set of commands can be accessed from the context-sensitive set of commands, should the user require performing a command which is not likely performed in a particular application.

Other aspects and features of the present invention will become apparent to those ordinarily skilled in the art upon review of the following description of specific embodiments of the invention in conjunction with the accompanying figures.

Generally, the present invention is preferably directed to methods and systems for selecting and invoking a command associated with an application on a mobile communication device. More particularly, the present invention is directed to a mobile communication device comprising a housing having a display, a plurality of input devices, and an interface for invoking a command associated with an application on the mobile communication device. The interface provides a reduced set of commands on the display accessed by actuating an input device. The reduced set of commands provides context-sensitive commands derived from a complete set of commands associated with the application that the menu is invoked in.

As used herein, a "mobile communication device" refers to any portable wireless device. These can include, but are not limited to, devices such as personal data assistants (PDAs), cellular and mobile telephones and mobile e-mail devices.

As used herein, an "interface" on a mobile communication device of the present invention is provides a mechanism for the user of the mobile device to interact with the device. The interface can be icon-driven, so that icons are associated with different applications resident on the mobile device. The applications can be executed either by selection of the associated icon or may also be executed in response to the actuation of either a soft or dedicated application key in a keyboard or keypad input. An "application interface" is an interface from which an application resident on the mobile can be executed. The application interface can include a "Home Screen", which is displayed when the mobile communication device of the present invention is first turned on. This Home Screen is also returned to when a user closes an active application, or after a task has been completed. The Home Screen can also show the status of the mobile communication device, such as an indication of whether Bluetooth or Wireless modes are on or off.

As used herein, an "input device" refers to any means by which the user directly provides input or instructions to the mobile device. The input device can be used to execute applications, perform functions, and/or invoke a command on a mobile communication device of the present invention. Exemplary input devices can include, but are not limited to, real and virtual keyboards, touch screens, thumb wheels, trackballs, voice interfaces and switches.

As used herein, an "application" is a task implemented in software on the mobile device that is executed by the mobile communication device of the present invention to allow specific functionality to be accessed by the user. Exemplary applications include, but are not limited to, messaging, telephony, address and contact information management and scheduling applications.

As used herein, a "function" is a task performed by the user in conjunction with a particular application. Exemplary functions can include, but are not limited to, composing e-mails (as part of a messaging application), composing memos (as part of a text editing application), placing a phone call (in a telephony application), and arranging a calendar (in a scheduling application).

As used herein, a "command" is a directive to (or through) the application to perform a specific task. A function may have many commands associated with it. Exemplary commands include send, reply and forward (when handling e-mail); copy, cut, and paste (when composing a memo); send (when placing a phone call). As noted above, a function can have multiple associated tasks, at least one of the associated tasks can be considered an "end-action" command for the particular function. "End-action" commands upon their completion terminate a function. One such example is that when composing an e-mail message (a function), the send command terminates the function upon completion, as e-mail no longer needs to be composed after it has been sent.

Commands can be invoked in a number of ways, for example, by actuating an input device, such as a key on a keypad, or keyboard, engaging a trackball, tapping a touch screen, or clicking a mouse or thumb wheel, etc. In some cases, a command can be tied to a sequence of inputs to allow the user to quickly perform the command (e.g. a command to execute a designated application can be associated either with a programmable key, or with a pairing of inputs such as depressing a thumb wheel and then pressing a keyboard key). The sequence of inputs need not be restricted to originating from a single input device, and can include a combination of inputs from different input devices. Execution of the sequence allows the user to rapidly requires that the sequence be memorized by the user. Users often have difficulty remembering complex or lengthy command sequences, and also may encounter difficulty in executing command sequences that make use of different input devices.

As used herein, an "application-sensitive function" is a function associated with a given application. For example, the function of composing an e-mail is associated with a messaging application and not a scheduling application. Therefore, composing e-mail is considered an application-sensitive function.

As used herein, a "context-sensitive command" is a command associated with a particular function. For example, a user might "send" an e-mail after it has been composed; the user would not "dial" an e-mail as they would a phone number. The "send" command, in this example, is a context-sensitive command associated with e-mail, while "dial" is an example of a context-sensitive command associated with telephony.

As used herein, a "full-function set" is a complete set of functions and commands associated with a particular application. A full-function set of functions includes application-sensitive functions and context-sensitive commands, as well as functions and commands which may be present across applications.

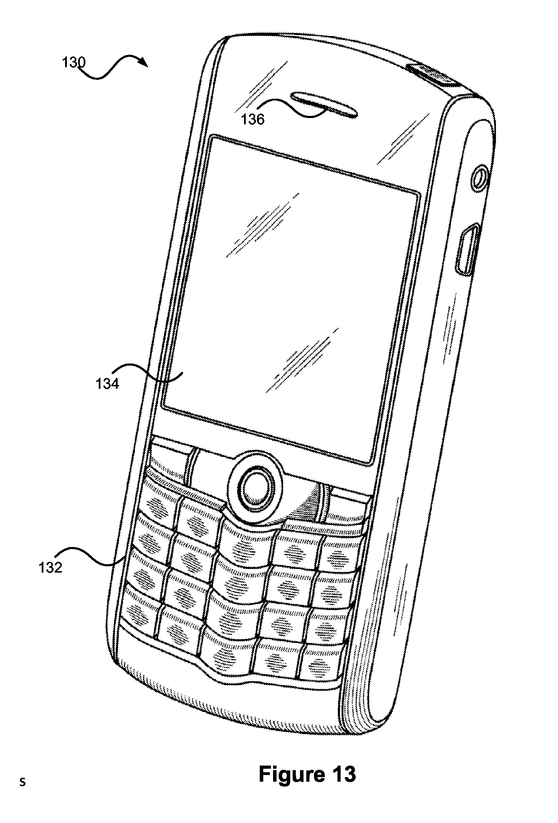

Fig. 13 illustrates an exemplary mobile communication device of the present invention. Mobile device 130 is preferably a two-way wireless communication device having at least voice and data communication capabilities along with the ability to execute applications. Depending on the exact functionality provided, the mobile device 130 may be referred to as a data messaging device, a two-way pager, a wireless e-mail device, a cellular telephone with data messaging capabilities, a wireless Internet appliance, or a data communication device, as examples.

Some of the elements of mobile device 130 perform communication-related functions, while other subsystems provide "resident" or on-device functions. Some elements, such as keyboard 132 and display 134, are for both communication-related functions, such as entering a text message for transmission over a communication network, and device-resident functions such as a calculator or task list.

For voice communications, received signals may be output to a speaker 136 and signals for transmission would be generated by a microphone (not shown) on the mobile device 130. Alternative voice or audio I/O subsystems, such as a voice message recording subsystem or a voice-interface input device, can be implemented on mobile device 130. Although in telephony applications, the primary output device is speaker 136, other elements such as display 134 can be used to provide further information such as the identity of a calling party, the duration of a call in progress, and other call related information.

Embodiments of the invention may be represented as a software product stored on a machine-readable medium (also referred to as a computer-readable medium, a processor-readable medium, or a computer usable medium having a computer readable program code embodied therein). The machine-readable medium may be any type of magnetic, optical, or electrical storage medium including a diskette, compact disk read only memory (CD-ROM), memory device (volatile or non-volatile), or similar storage mechanism. The machine-readable medium may contain various sets of instructions, code sequences, configuration information, or other data. Those of ordinary skill in the art will appreciate that other instructions and operations necessary to implement the described invention may also be stored on the machine-readable medium. Software running from the machine-readable medium may interface with circuitry to perform the described tasks.

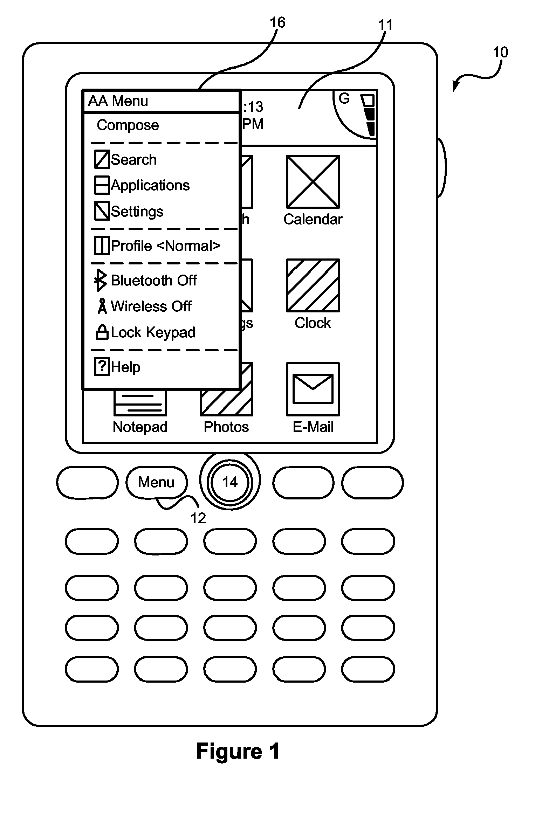

Turning now to Figure 1, a Home Screen is presented on the display 11 on the mobile device 10 which, like mobile device 130 in Figure 13, is an embodiment of the mobile communication device of the present invention. The Home Screen is, in the exemplary embodiment shown in Figure 1, the default screen when the device is first turned on. The Home Screen can also be displayed when all active applications are terminated, or for indicating the "status" of the mobile communication device. Mobile device 10 can have one or more input devices. The input devices are used to provide input commands to the mobile device, and can be employed to provide the user access to a set of functions or commands. A keyboard/keypad including menu button 12 and trackball 14 are illustrated as input devices in Figure 1. In one embodiment, actuation of menu button 12 enables a user to access a menu 16. Accessing a menu can be accompanied by audio indications specific to the menu. This allows a user to audibly determine which menu is being accessed.

One or more sets of functions or commands can be accessed on the mobile communication device of the present invention. The commands can be presented in the form of menus which can be viewed on the display of the device. Herein are described three kinds of menus: the Activities/Applications (AA) menu, the Primary Actions menu and the Edit menu.

### Activities/Applications (AA) Menu

As the functionality of mobile devices increase, the number of applications executable by a mobile device increases. As the number of applications, and their functionality increases, the number of functions and commands associated with the applications increases as well. This increase in the number of functions and commands available to the user makes selecting an appropriate function or command difficult. The number of functions and the limited size of the display on most mobile communication devices has typically resulted in a long list of functions that the user must scroll through to select a desired function. For most users, a small number of commands and functions are used far more frequently than other functions. Being able to quickly identify and access these functions, even if it involves making the other functions more difficult to access, provides the user with an enhanced interface.

To provide the user of mobile device 10 with such an enhanced interface, the present invention makes use of an Activities/Applications (AA) menu. The AA menu provides a user with a reduced set of functions and commands associated with an application. The AA menu comprises a set of application-sensitive functions derived from a full-function set of functions associated with a particular application. From the AA menu, commonly used functions can be invoked. These functions can be pre-determined based on how likely each is to be performed with a given application. Depending on the application, or the function within the application, the AA menu may change to display the functions most likely to be performed. An AA menu may also contain a set of high-level functions or commands which can be performed in more than one application. These particular functions or commands may be associated with the general operation of the mobile communication device as a whole. These can include, but are not limited to, turning the alarm on or off, locking the keypad, or accessing a "help" application. Furthermore, the AA menu can provide the user with a quick mechanism to switch between applications.

An AA menu can be linked to a dedicated input device, or an element of an input device (such as a key on a keypad, for example). In this way, the AA menu can be readily accessed at any point during an application or from the Home Screen.

Figures 1 to 3 show embodiments of the interfaces displaying an Activities/Applications (AA) menu of the present invention from a Home Screen. When a user presses Menu button 12, an AA menu 18 for a particular application is presented on the display 11. The AA menu 18 provides a list (or lists) from which a user can access a particular function associated with the application. The exemplary AA menu 18 is based on the interface principle of "see and click". In this principle, it is not required for a user to memorize shortcuts because the functions can be invoked through a menu that can be viewed at any time. AA menu 18 can display a text label of the functions, a graphic icon representing the function or a combination thereof. If a combination of icons and text are used, not every function or command in the list need be represented by both an icon and a text label. As shown in Fig. 1, exemplary functions in an AA menu include: Compose, Search, Applications, Settings, Profile, Blue Tooth (On/Off), Wireless (On/Off), Key Lock (On/Off) and Help.

If the AA menu is accessed from an application, the AA menu will contain a list of functions appropriate to the given application. When accessed from an application the AA menu can also contain a number of functions not present in an AA menu accessed from the Home Screen.

In one embodiment, the AA menu can be accessed at any time during the use of the device. Often, the AA menu is accessed before performing a desired application. This can occur on the Home Screen or when a particular application has already been accessed. From the Home Screen, a high-level application can be accessed. However, as mentioned previously, a high-level application may also be accessed at any point during an application.

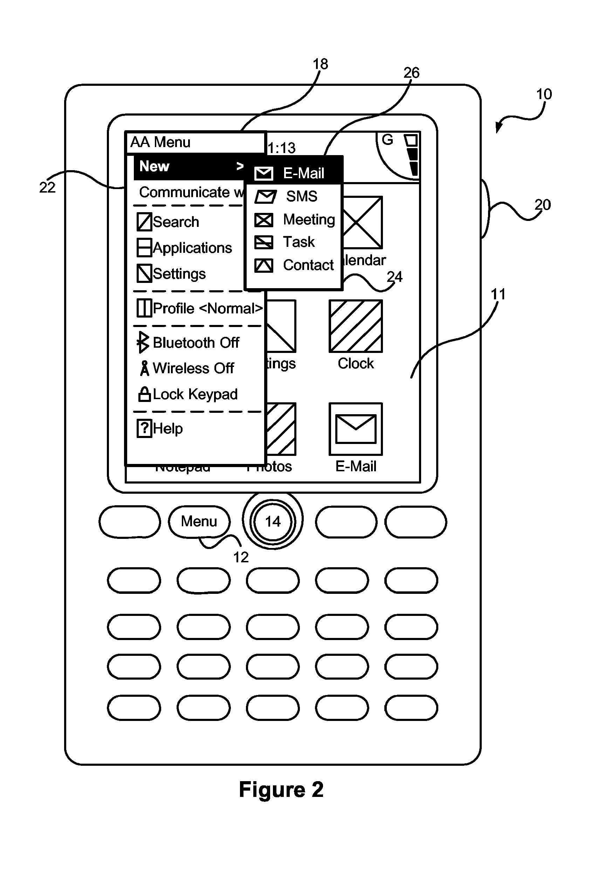

Figure 2 illustrates the use of AA menu 18 to invoke the function of composing a new e-mail message. AA menu 18, in this example, has been brought up from the Home Screen by pressing the Menu button 12. The user then can scroll through AA menu 18 (using a wheel 20 or trackball 14, for example) and select an option presented by AA menu 18 such as "New" 22. In an embodiment of the present invention, selection of a menu item such as "New" 22 can be performed by pressing the Menu button 12 or another input device. Thus, menu button 12 can serve both to activate AA menu 18 and to select an option in the menu. In the example shown, pressing the Menu button 12 a second time presents a nested menu 24. The user can then scroll through nested menu 24 to select "E-mail" 26. Once again, selection of a menu option is performed by actuating Menu button 12 or another input device.

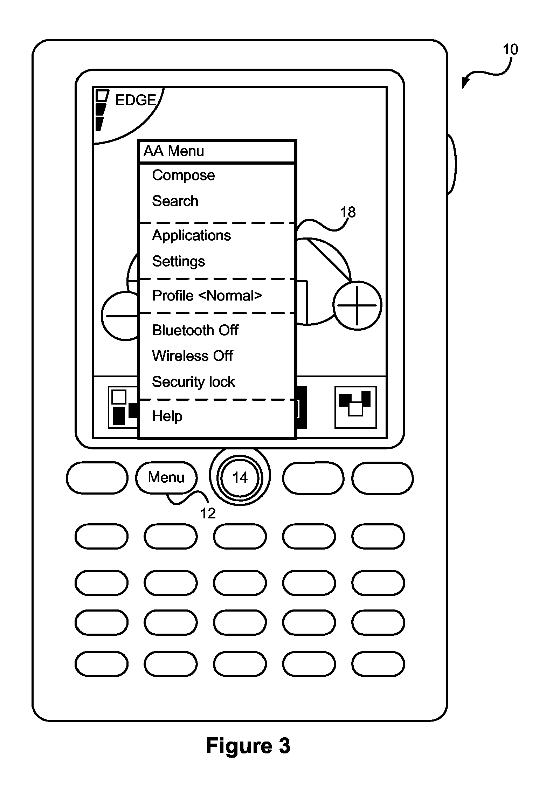

In Figure 3, the display of AA menu 18 in this illustrated embodiment presents the user with a different set of options than provided earlier. One skilled in the art will appreciate that different options can be presented to the user in accordance with a predetermination of most likely tasks, or can be based on user preferences.

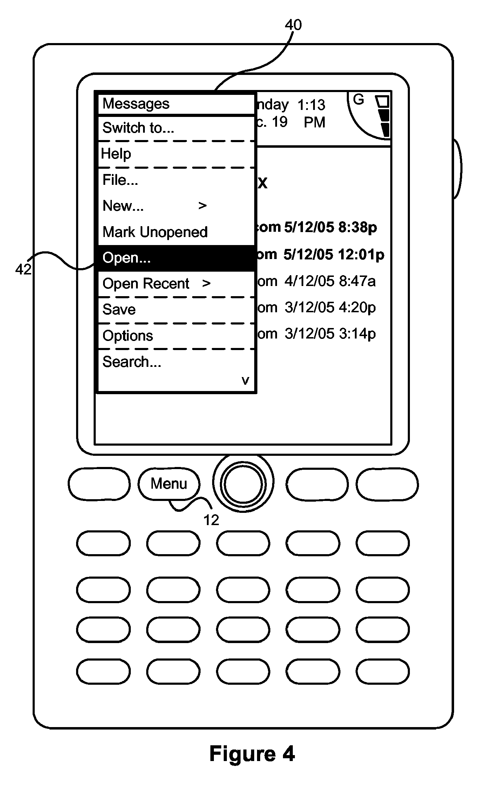

Figure 4 shows an instance of AA menu 40 when invoked from an application, in this example a messaging application. When the Menu key 12 is actuated, the AA menu 40, of the presently illustrated embodiment, offers the following commands and functions: Switch to, Help, File, New, Mark Unopened, Open, Open Recent, Save, Options and Search. In this example, command "Open" 42 is highlighted. The AA menu 40 is summoned with the same mechanism as used to summon the AA menu 18 illustrated in Figures 1-3, actuation of menu key 12. The AA menu for each instance is tailored to the needs of the application or environment from which it is called. In both environments it provides a number of similar options such as the ability to launch another application (using an option such as "switch to...") or call for a new function such as composing an e-mail or an SMS message, or creating a new appointment in the scheduler (using an option such as "New...").

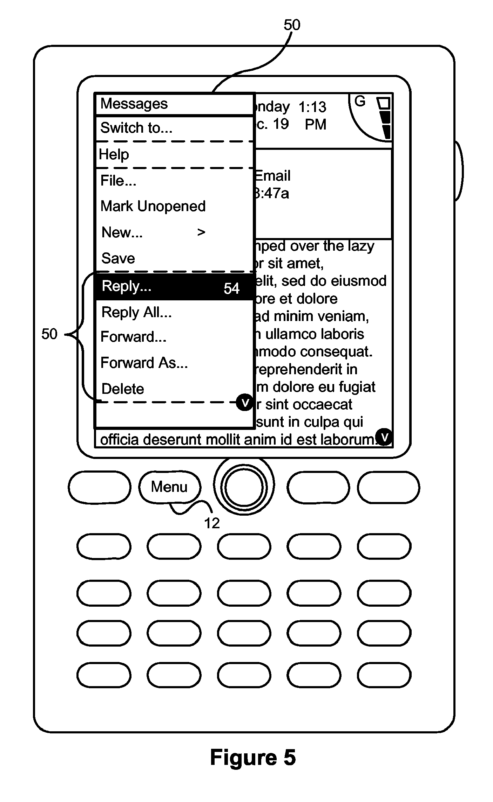

Figure 5 illustrates a segregated subset 50 of commands. Reply, Reply All, Forward, Forward As and Delete are segregated, and in this embodiment are grayed from the remainder of AA menu 52. Reply 54 is shown highlighted. Use of segregation, in a divided list, by color, or by other such means, allows AA menu 52 to maintain consistency among instances, but changed a select area to be application or task appropriate. Often, a user will be able to access these segregated or nested menu options when selecting a function from an AA menu. To guide the user to these options, a symbol such as ">" or "..." may be present adjacent to the options.

To exit the AA menu, the Escape key (not shown) or another suitable input device is depressed.

### Primary Actions Menu

Due to the increasing number and complexity of applications available on mobile communication devices, finding a command related to an application can be frustrating to users due to the limitations of the reduced form factor of many mobile communication devices. A user with limited knowledge or use of commands not commonly performed must sift through a large number of commands to find the desired task. For most users, a small subset of the commands forms a core set of commands used more frequently than the other commands. It can be time-consuming for a user to scroll through a complete listing of commands, to select one of the options and perform a task in an application.

To address this concern, the present invention provides a "Primary Actions" menu. The Primary Actions menu displays a convenient reduced set of commands specifically related to the current application or the function presently being used. The commands in a Primary Actions menu are derived from a full selection of the commands associated with the application or function. Depending on the application, one or more commands from a Primary Actions menu may also appear in a corresponding AA menu as illustrated in Figures 1-5. Thus, the Primary Actions menu can be considered a shortcut for accessing commands most likely to be invoked in a particular application. However, these particular commands can also be accessed from an AA menu.

The Home Screen or any particular application can have its own Primary Actions menu. In some applications, only one (default) command is available; rather than opening up a set of commands in a Primary Actions menu, the default command can be performed. Keyboard shortcuts associated with commands in the Primary Actions menu can be displayed beside the corresponding option in the menu. This provides the user with the shortcut, and allows the user to learn shortcuts as the need arises. A similar feature can be provided with the AA menu illustrated in Figures 1-5. The Primary Actions menu can associate icons with particular commands to render the commands more visibly accessible.

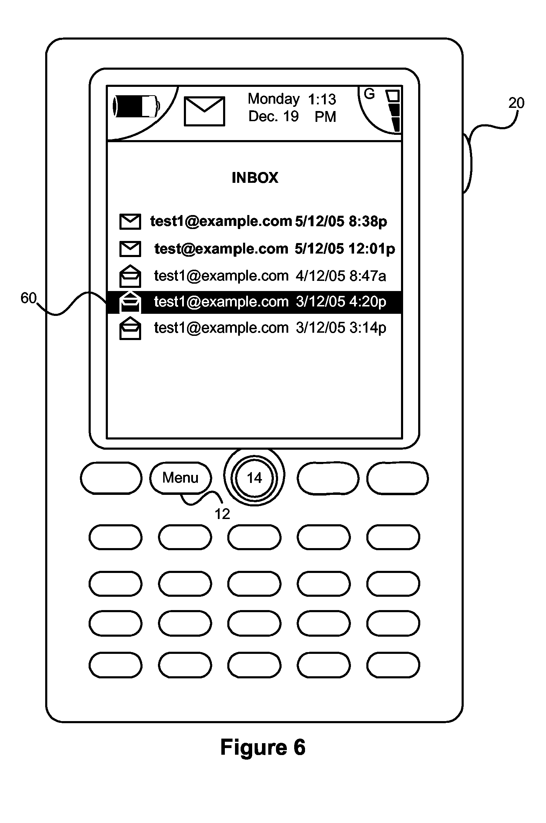

Launching the Primary Actions menu can be linked to a dedicated input device or to a keyboard shortcut. In some embodiments of the present invention, the Primary Actions menu is accessed by actuating an input device, or a key, distinct from the key or input device used to access the AA menu. In the embodiments shown in Figures 6 to 9, the Primary Actions menu is accessed by depressing a trackball 14; however, any other suitable input device may be used. Although trackballs are commonly used to scroll in multiple dimensions, trackball 14 as used in embodiments of the present invention can also be pressed to provide dual functionality to the trackball device which facilitates the use of trackball 14 as an additional button. The trackball 14 is ideally located in an accessible location, such as adjacent the Menu input device 12.

The commands in a Primary Actions menu are preferably context-sensitive. The commands can be pre-determined and/or user-defined based on how likely each is to be performed within the context of a given application. Depending on the application, or the function within the application, the Primary Actions menu may change to reflect functions that are more likely to be performed. User-defined options in the Primary Actions menu (or also in the AA menu) can either be set through configuration options, or can be dynamically adjusted based on the historical command usage of the user.

Figures 6 to 9 show examples of Primary Actions menus and illustrate methods of performing commands using Primary Actions menus. Figure 6 illustrates a typical e-mail inbox interface. This can be the default interface the user interacts with when the e-mail messaging application is launched. The user can scroll (such as with the thumb wheel 20 or trackball 14) through the list of e-mails in the inbox and select (highlights) a desired e-mail 60. E-mail messages can be selected and read through the use of various input devices. In one embodiment, trackball 14 is used to scroll through the list of messages, and is depressed to select and e-mail message.

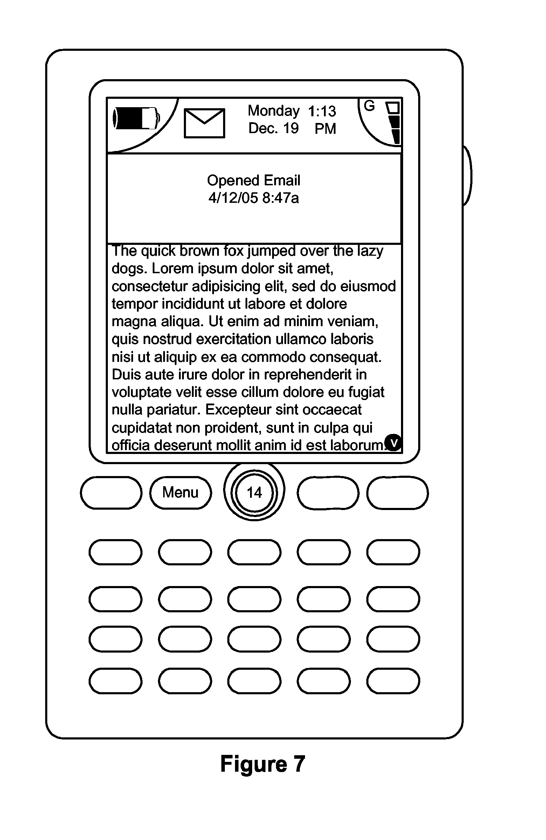

When the user selects the desired e-mail message 60 in Figure 6, the mobile device displays the message as shown in Figure 7 . There is a commonly used set of commands that are typically associated with the review of an e-mail message. The user may want to reply to the e-mail message, forward the e-mail message, reply to all recipients of the e-mail message or delete the message. Conventionally, a menu such as the AA menu would be used to present these options to the user. Unfortunately, these are not the only options presented when an AA menu is called up, and the other options typically result in the user having difficulty finding and selecting the appropriate option easily. To provide rapid access to the context sensitive commands associated with the review of the mail message, the user can call up the Primary Actions menu. In an embodiment, the user depressed trackball 14 to bring up a Primary Actions menu associated with reading e-mail.

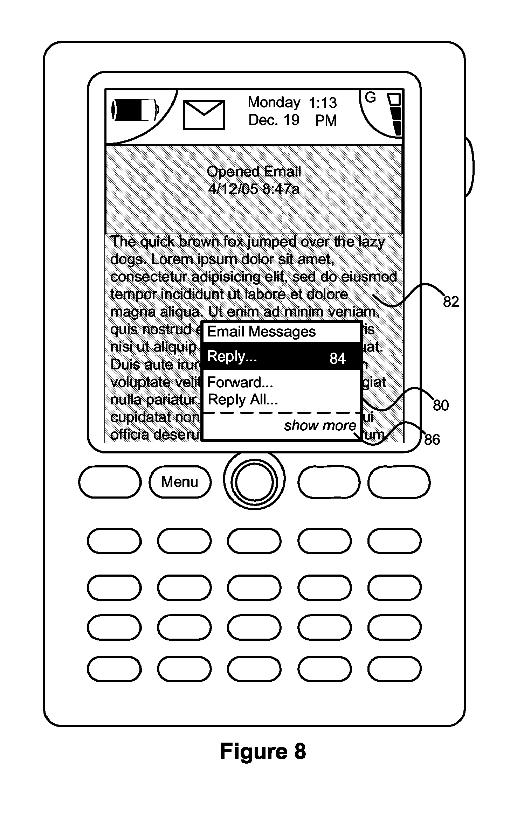

Figure 8 shows a Primary Actions menu 80. In the illustrated exemplary embodiment, the Primary Actions menu 80 is illustrated as having a white background and is superimposed over e-mail message 82, which may be darkened or grayed-out when a Primary Actions menu is accessed. In this menu 80, the commands Reply, Forward, Reply All appear. These particular commands are, in the illustrated embodiment, determined to be the most likely commands to be invoked within the E-mail function. The Open or File commands, for example, are not associated with a Messages "Primary Actions" menu 80 as these options are not frequently used with the E-mail function. In Figure 8, the Reply command 84 is highlighted. In some embodiments of the present invention, the command which is highlighted when a Primary Actions menu is initially accessed, is a default command associated with a particular context. However, this does not prevent a user from selecting another command from the Primary Actions menu.

Figure 8 also shows a Primary Actions menu having a Show More option 86. Selecting this command initiates a longer set of functions or commands. The selection of "Show more" 86 provides the user with an alternate method of listing commands associated with the application. This can result in the display of either an application specific menu, or can be used to launch an AA menu.

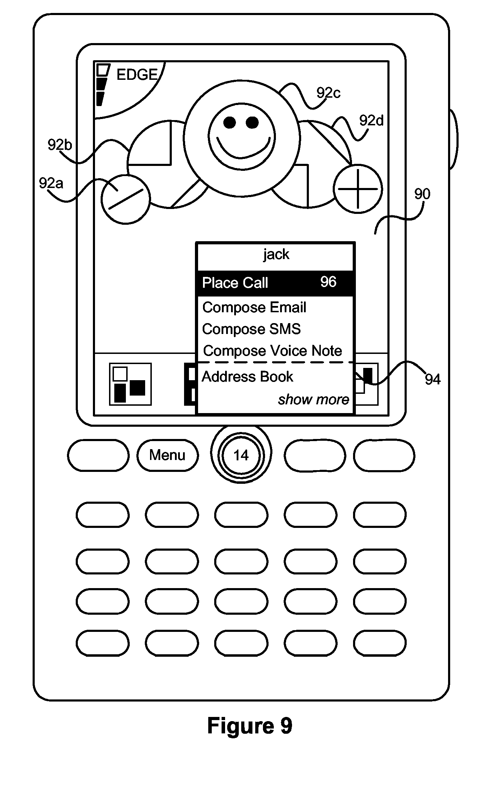

Figure 9 shows another example of a Primary Actions menu. In the example shown, a display 90 is an interface for a telephony or contact information application that shows images (92a, 92b, 92c, 92d). In the illustrated embodiment, when a contact is selected (preferably through use of a scroll wheel, or trackball 14) depressing trackball 14 will bring up the Primary Actions menu 94. In this particular example, the Primary Actions menu 94 lists common more commonly associated with communicating with the contact person: Place Call, Compose E-mail, Compose SMS, Compose Voice Note and Address Book.

### Edit Menu Components

As with other tasks, editing text on a mobile communication device can be cumbersome and frustrating due to the limited form factor of the device. A user may need to perform numerous functions while editing large tracts of text. Because of the limited space available on the display of a device, a set of on-screen editing options, such as those associated with soft keys, can obscure the text to be edited, as can menus appearing at fixed locations on the screen. Errors in the editing process often occur, resulting in the undesirable editing of text, a loss of productivity and frustration to the user. Menus typically default to a particular location on the screen of a mobile device, and have typically been associated with the application in use. Menus related to text editing functions and commands also provide no indication of the region of text that they are being applied to.

To alleviate user frustration and loss of productivity, an Edit menu is provided by the present invention. The Edit menu can be thought of as a variant to the Primary Actions menu. The Edit menu provides a set of commands designed specifically for editing documents (such as e-mails and memos) and other text containers (such as fields) in text-based applications. The Edit menu can also provide a set of commands that allows the user to share data, within and between applications, via a Clipboard.

The Edit menu can be considered a reduced set of editing commands, and in the embodiment discussed below includes commands most likely to be invoked when performing a particular editing function. The commands in an Edit menu are derived from a full-function set of editing commands associated with a text-based application. The editing commands in the Edit can also be made available in other menus such as the AA menu. The Edit menu can be considered a shortcut for accessing the editing commands most likely to be invoked in a particular text-based application. Accessing the Edit menu reduces time and effort to the user.

In certain embodiments of the present invention, the Edit menu is presented below the text to be edited. In this way, text to be edited is not obscured, thus facilitating the editing task at hand. The location of the edit menu below the text upon which the action is to be performed, allows the user to quickly associate the function to be performed with the text that it will be performed on.

Launching the Edit menu can be linked to a dedicated input device. In some embodiments of the present invention, the Edit menu is accessed by pressing an input device different than the Menu key. As with the Primary Actions menu, an Edit menu may also be accessed by a depressing a trackball.

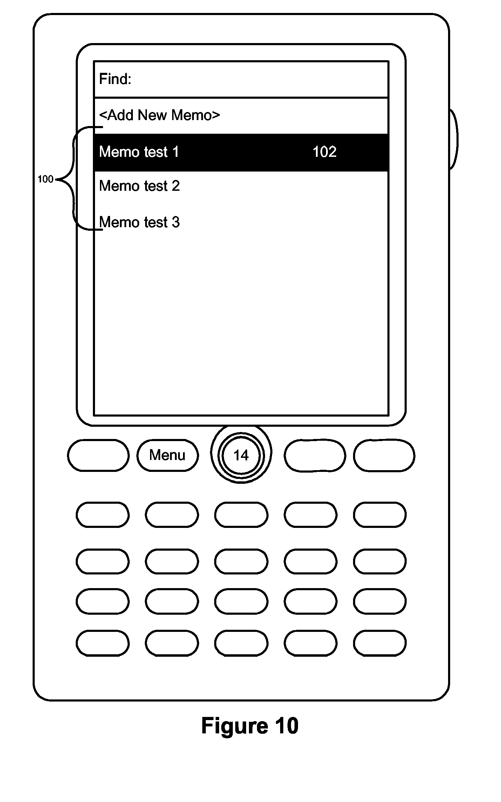

Figures 10 to 13 illustrate examples editing a memo using the Edit menu. As shown in Figure 10, the exemplary text editing application provides the user with the ability to select a text file to open from the Open Memo menu 100. The memo to be edited, "Memo test no. 1" 102, is highlighted. The user can select the memo using the input devices, such as trackball 14. Upon actuation of the trackball 14, the selected memo 102 is opened for viewing and editing.

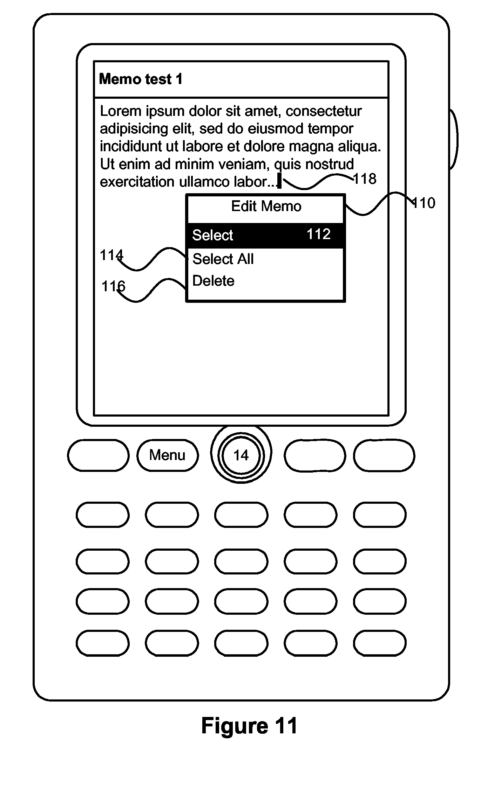

Figure 11 shows an open memo. The Edit menu 100 is called up, in one embodiment by clicking on trackball 14. In this particular Edit menu, the commands Select, Select All and Delete appear. The "Select" command 112 is used to allow selection of text in the memo. Typically users of mobile devices must make use of a "Select" command in a menu to select text as the users are typically not provided with the conventional pointer interfaces that standard computing platforms make use of. When the Select command 112 is selected, the user indicates the portion of the text to be edited using an input device such as trackball 14. The Select All command 114 allows the user to select all the text in the document, thus making it easier for a user to highlight large blocks of text. The Delete command 116 allows the user to delete text immediately adjacent the cursor. In one embodiment, the delete command acts like a "backspace" and delete text immediately preceding the cursor position, while in other embodiments it can delete text immediately following the cursor position.

The Edit menu 110 can appear below the text so that the text to be edited is not covered up by the Edit menu 110. This allows the user to clearly see the text to be edited. A cursor 118 is positioned at the end of the text.

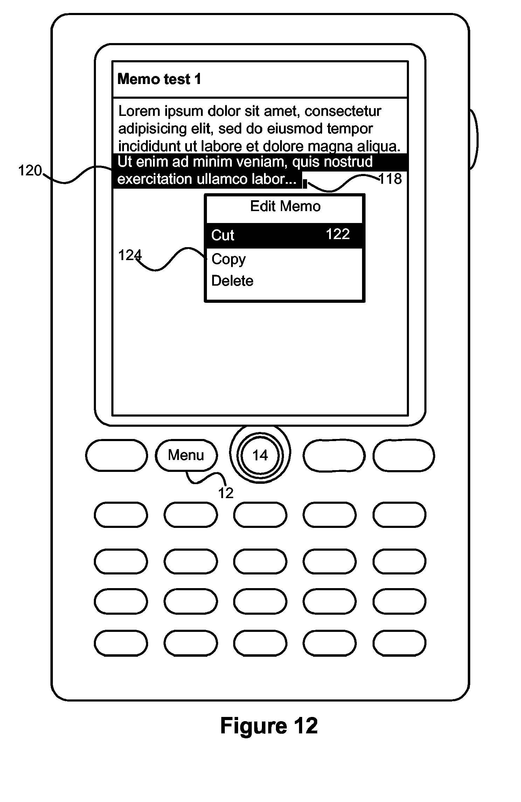

Turning to Figure 12, the user has selected a block of text 120 (indicated as highlighted text). In the illustrated embodiment, the user dragged the selection box across the desired text using the trackball 14. In the present example, the cursor 118 is a flashing vertical bar, although other visualizations can also be used. After the desired text is highlighted, the user presses the trackball 14 to bring up Edit menu 126. The options in edit menu 126 differ from the previous edit menu 110 as they provide functions applicable to highlighted text blocks. The user can then select one of the commands in the Edit menu 126 by pressing trackball 14. The selected command is then executed. Upon selection of a command, the mobile device performs the command and removes the Edit menu.

An icon representative of the desired command may be included next to, or substituted for, the text description of the command. In a further embodiment (not shown), when a command is highlighted, the cursor 118 can change appearance to reflect the highlighted command. Thus, when a user highlights the cut command 122, an icon, such as a pair of scissor, may be presented next to the cursor 118. This provides the user with further visual cues directly associated with the highlighted section. Similarly, if the Copy command 124 is selected, a duplicate cursor (to represent something being copied) may be present next to the cursor 118. The presence of an icon does not influence the utility of the particular Edit menu command; it merely serves to direct a user to a command in a convenient manner.

Because the Edit menu is akin to a Primary Actions menu, there may also be an AA menu associated therewith. If a user wishes to invoke a command not in the Edit menu, pressing the Menu button 12 can call up an additional, longer set of commands, such as those in an AA menu, which can be performed within the Edit application. Included in this menu are commands likely to appear in the Edit menu, together with editing commands which are less likely to be invoked. As with the Primary Actions menu, selecting a "Show More" option in the Edit menu can launch an AA menu associated with the text-based application at hand.

One additional feature associated with editing (but not explicitly included in the Edit menu) is the Clipboard (not shown). The Clipboard stores data cut or copied from a document to allow the user to place the data into another document. The Clipboard is available to most or all applications, and its contents do not change when the user switches from one application to another. The Clipboard provides support for the exchange of different data types between applications. Text formatting is preferably maintained when text is copied to the Clipboard.

As Figures 11 and 12 illustrate, the Edit menu contains commands most likely associated with editing text. In the exemplary embodiment of the Edit menu shown in Figure 11, the commands Select, Select All and Delete are indicated. The Select command permits a user to highlight any or all of the characters in a text field, whereas when the Select All command is selected, every character in the text field is highlighted. The Delete command removes selected data without storing the selection on the Clipboard. This command is equivalent to pressing a Delete key or a Clear key which may be present on the device.

Turning to Figure 12, a user has selected a portion of text to be edited. In addition to the Delete command described above, the exemplary Edit menu shown here offers two additional commands: Cut, Copy. The Cut command (highlighted in Figure 12) removes selected data from the document. The Cut command stores the selected text on the Clipboard, replacing the previous contents of the Clipboard. The Copy command makes a duplicate copy of the selected data. The copied data is stored on the Clipboard.

Other editing commands known to the skilled person can be included in the Edit menu of the present invention. These can include: Undo (which reverses the effect of a user's previous operation); Redo (which reverses the effect of the most recent Undo command performed); Paste (which inserts data that has been stored on the Clipboard at a location (insertion point) in a text field); Paste and Match Style (which matches the style of the pasted text to the surrounding text); Find (for finding a particular part of text); or Spelling (which checks the spelling of text). The above list represents a sampling of editing commands which can be included in an Edit menu, and is not intended to be exhaustive.

The above-described embodiments of the present invention are intended to be examples only. Alterations, modifications and variations may be effected to the particular embodiments by those of skill in the art without departing from the scope of the invention, which is defined solely by the claims appended hereto.

## Claims

1. A mobile communication device comprising:
a housing having a display and a plurality of input devices; and
an interface for invoking a command associated with an application on the mobile communication device, the interface comprising a reduced set of commands on the display and accessed by actuating one of the plurality of input devices, the reduced set of commands comprising a set of context-sensitive commands derived from a full-function set of commands associated with the application.

2. The mobile communication device of claim 1 wherein the set of context-sensitive commands is a menu comprising commands likely to be performed in the application.

3. The mobile communication device of claim 1 or claim 1 wherein the set of context-sensitive commands comprises the most likely commands to be performed in the full-function set of commands.

4. The mobile communication device of any preceding claim1 wherein the one of the input devices is a dedicated input device for displaying the set of context-sensitive commands on the mobile communication device.

5. The mobile communication device of claim 4 wherein the dedicated input device is a trackball.

6. A user interface for invoking a context-sensitive command associated with an application on a mobile communication device, the interface comprising:
a display;
a plurality of input devices on the mobile communication device, and
a reduced set of commands on the display accessed by actuating one of the plurality of input devices, the reduced set of commands comprising a set of context-sensitive commands derived from a full-function set of commands associated with the application.

7. The user interface of claim 5 wherein the set of context-sensitive commands is a menu comprising commands more likely to be performed in the application than other commands in the full-function set of commands.

8. The user interface of claim 5 or claim 7 wherein the one of the input devices is a dedicated input device for displaying the set of context-sensitive commands.

9. The user interface of claim 8 wherein the dedicated input device is a trackball.

10. A method of invoking a command associated with an application on a mobile communication device, the method comprising:
selecting the application from an application interface;
actuating an input device on the mobile communication device to display a reduced set of commands comprising a set of context-sensitive commands derived from a full-function set of commands associated with the application;
selecting the command from the set of context-sensitive commands; and
actuating the input device to invoke the command.

11. The method of claim 9 wherein the set of context-sensitive commands is a menu comprising commands which are more likely to be performed in the application than commands from the full-function set of commands.

12. The method of claim 9 or claim 11 wherein the input device is a dedicated input device for displaying the set of context-sensitive commands on the mobile communication device.

13. The method of claim 12 wherein the dedicated input device is a trackball.

14. The method of any one of claims 9 to 13 wherein the full-function set of commands is accessed from the set of context-sensitive commands.

15. A computer program product for invoking a command associated with an application on a mobile communication device, the computer program product comprising a computer readable medium embodying program code means for implementing on a mobile communication device the method of any one of claims 10 to 14.
